# EUROPÄISCHE PATENTSCHRIFT

(11) **EP 3 929 107 B1**
(45) Veröffentlichungstag und Bekanntmachung des Hinweises auf die Patenterteilung: **05.08.2026**
(21) Anmeldenummer: 21175780.2
(22) Anmeldetag: 25.05.2021
(51) Int. Cl.: B65G 1/04

(54) **TRANSPORTFAHRZEUG ZUM EINSATZ IN EINEM LAGER- UND ENTNAHMESYSTEM FÜR BEHÄLTER SOWIE EIN LAGER- UND ENTNAHMESYSTEM**
STORAGE AND RETRIEVAL SYSTEM AND TRANSPORT VEHICLE FOR USE IN A STORAGE AND RETRIEVAL SYSTEM FOR CONTAINERS
VÉHICULE DE TRANSPORT DESTINÉ À ÊTRE UTILISÉ DANS UN SYSTÈME DE STOCKAGE ET DE RETRAIT POUR RÉCIPIENTS, AINSI QUE SYSTÈME DE STOCKAGE ET DE RETRAIT

(30) Priorität: 24.06.2020 DE 102020207852
(43) Veröffentlichungstag der Anmeldung: 29.12.2021
(60) Teilanmeldung: 22176559.7
(73) Patentinhaber: Gebhardt Fördertechnik GmbH, D-74889 Sinsheim (DE)
(72) Erfinder: Gebhardt, Marco, 74889 Sinsheim (DE); Knoop, Alexander, 74889 Sinsheim (DE); Eder, Jörg, 67661 Kaiserslautern (DE)
(74) Vertreter: Ullrich & Naumann PartG mbB

(56) Entgegenhaltungen:
- EP-A1- 3 192 751
- EP-A1- 3 904 238
- WO-A1-2019/076760
- WO-A1-2021/239515
- US-A1- 2018 346 243

## Beschreibung

Die Erfindung betrifft ein Transportfahrzeug zum Einsatz in einem Lager- und Entnahmesystem für Behälter.

Des Weiteren betrifft die Erfindung ein derartiges Lager- und Entnahmesystem für Behälter, umfassend eine Gitterstruktur mit einer Vielzahl von Gitterzellen, wobei jede Gitterzelle eine Lagersäule einer unterhalb der Gitterstruktur angeordneten Behälter-Lagerstruktur definiert, wobei die Lagersäulen eingerichtet sind, jeweils einen vertikalen Stapel von Behältern aufzunehmen, und wobei die Gitterstruktur Längstransportwege in einer Längsrichtung und Quertransportwege in einer Querrichtung definiert.

Weiterhin betrifft die Erfindung ein Verfahren zum Zugreifen auf einen Behälter in einem Lager- und Entnahmesystem, wobei mindestens ein wie oben angegebenes Transportfahrzeug eingesetzt wird.

Transportfahrzeuge der in Rede stehenden Art zum Einsatz in Lager- und Entnahmesystemen für Behälter sind seit einigen Jahren aus der Praxis bekannt und finden insbesondere in Lager- und Entnahmesystemen ihre Anwendung, die als spezielle automatisierte Blocklager ausgebildet sind. Diese speziellen Warenlager sind entwickelt worden, um herkömmliche Warenlager insbesondere im Hinblick auf die realisierbare Lagerdichte zu verbessern. Bei herkömmlichen Warenlagern befindet sich das Lagergut üblicherweise in Lagerbehältern, welche in Regalen gelagert werden, die in Regalreihen angeordnet sind. Jeder Lagerbehälter enthält dabei eine Vielzahl von Produkten eines Produkttyps. Die Bedienung eines solchen Warenlagers erfolgt über Freiräume zwischen den Regalreihen, den sogenannten Lagergassen, in denen mittels eines Transportsystems, bspw. einem Regalbediengerät oder einem Shuttle-System, die einzelnen Regalfächer angefahren werden können. Da die Lagergassen für die eigentliche Lagerung nicht zur Verfügung stehen, ist die Lagerdichte derartiger Warenlager relativ niedrig. Mit anderen Worten ist die Größe des tatsächlich für die Lagerung von Produkten zur Verfügung stehenden Raums relativ klein im Vergleich zu der Größe des Raums, der für das Warenlager insgesamt erforderlich ist.

Demgegenüber verfolgen die oben angesprochenen automatisierten Blocklager - sog. Gridstores - einen alternativen Ansatz. Danach werden die Lagerbehälter nicht mehr in konventionellen Regalen gelagert, sondern die Lagerbehälter werden in einem selbsttragenden modularen Aluminiumraster, welches vertikale Schächte definierter Größe bildet, übereinandergestapelt. Die Stapel sind dabei in einer Längsrichtung und in einer Querrichtung in Reihen angeordnet. Auf die einzelnen Lagerbehälter wird von oben mittels geeigneter Transportfahrzeuge zugegriffen, die sich üblicherweise auf entsprechenden Fahrschienen bewegen, die in Form einer 2D Matrix auf der Regalstruktur angeordnet sind. Dementsprechend müssen zwischen den Reihen keine Lagergassen ausgebildet sein, weshalb diese Lagerstruktur eine deutliche Verbesserung der Lagerungsdichte bietet. Derartige automatisierte Blocklager, die eines der Hauptanwendungsfelder für Transportfahrzeuge gemäß Ausführungsformen der vorliegenden Erfindung bilden, sind teilweise auch unter der Kennzeichnung AutoStore^{®} bekannt.

Die WO 2017/153583 A1 zeigt ein derartiges Lager- und Entnahmesystem zusammen mit einem entsprechenden Transportfahrzeug. Das Transportfahrzeug, welches einen zentralen, nach unten geöffneten Aufnahmeraum zur Aufnahme von Transportgut in Form von genormten Lagerbehältern umfasst, verfügt über ein Fahrwerk mit zwei Radsätzen mit jeweils vier Rädern, wobei einer der Radsätze für eine Bewegung des Transportfahrzeugs auf einer gitterförmigen Schienenstruktur in einer Längsrichtung und der andere Radsatz für eine Bewegung in einer dazu orthogonalen Querrichtung ausgelegt ist. Für die Ausführung von Richtungswechseln können die Radsätze in einer vertikalen Richtung bewegt werden, um somit von der Schienenstruktur abgehoben bzw. auf diese abgesenkt zu werden.

Des Weiteren zeigt die WO 2015/019055 A1 ein ähnliches Transportfahrzeug, bei dem im unteren Bereich des Transportfahrzeugs ein Aufnahmeraum für einen Behälter gebildet ist. Der Antrieb für Räder eines Fahrwerks des Transportfahrzeugs ist oberhalb des Aufnahmeraums angeordnet.

Weiterhin ist aus der EP 3 192 751 A1 ein Transportfahrzeug bekannt, das auf einer Gitterstruktur eines Lager- und Entnahmesystems für Behälter fahren kann. Das Transportfahrzeug weist eine Greifeinrichtung zum Erfassen, Bewegen und Absetzen eines Behälters auf, wobei der Behälter mittels der Greifeinrichtung seitlich des Transportfahrzeugs bewegt werden kann. Das Transportfahrzeug ist derart ausgebildet, dass es je nach Betriebsposition der Greifeinrichtung mindestens zwei Gitterzellen der Gitterstruktur abdeckt bzw. für andere Greifeinrichtungen blockiert.

Des Weiteren ist aus der WO 2019/238703 A1 ein Transportfahrzeug zum Einsatz auf einer Gitterstruktur eines Lager- und Entnahmesystems für Behälter bekannt, wobei das Transportfahrzeug einen unteren Fahrzeugkasten aufweist, in dem alle Fahrantriebe und das Fahrwerk angeordnet sind. Auf diesem Fahrzeugkasten können unterschiedliche Funktionselemente wie beispielsweise ein Rollenförderer oder eine Greifeinrichtung angeordnet werden.

Weiterhin ist aus der US 2018/346243 A1 ein Transportfahrzeug 230 mit einem Fahrwerk und einem oberhalb des Fahrwerks ausgebildeten Aufnahmeraum 40 für einen Behälter 10 bekannt.

Die WO 2019/076760 A1, welche die Merkmale des Oberbegriffs des Anspruchs 1 offenbart, zeigt ebenfalls ein Transportfahrzeug 3 mit einem Fahrwerk und einem oberhalb des Fahrwerks ausgebildeten Aufnahmeraum für einen Behälter 106.

Des Weiteren zeigt die nachveröffentlichte EP 3 904 238 A1 ein Transportfahrzeug zum Einsatz in einem Lager- und Entnahmesystem für Behälter, wobei das Transportfahrzeug einen oberhalb des Fahrwerks ausgebildeten Aufnahmeraum aufweist. Die bekannten Transportfahrzeuge sowie Lager- und Entnahmesysteme sind dahingehend problematisch, dass je nach Positionierung eines Behälters, auf den ein Zugriff gewünscht ist, dieser Zugriff unter Umständen äußerst lange dauert, insbesondere wenn dieser Behälter tief in einem als Blocklager ausgebildeten Lager- und Entnahmesystem, d. h. unter vielen anderen Behältern, positioniert ist. Im Konkreten bedeutet dies ein zeitintensives sukzessives Anheben und Umlagern der darüberliegenden anderen Behälter. Die bislang bekannten Transportfahrzeuge sowie Lager- und Entnahmesysteme versuchen diese Problematik mit verschiedenen Ausgestaltungen zu lösen. Jedoch sind sämtliche dieser Ausgestaltungen im Hinblick auf einen besonders schnellen Zugriff auf beliebige Behälter unbefriedigend.

Der vorliegenden Erfindung liegt die Aufgabe zugrunde, ein Transportfahrzeug sowie Lager- und Entnahmesystem und ein Verfahren zum Zugreifen auf einen Behälter in einem Lager- und Entnahmesystem anzugeben, wonach ein besonders schneller und effizienter Zugriff auf beliebige Behälter mit konstruktiv einfachen Mitteln ermöglicht ist.

Erfindungsgemäß wird die voranstehende Aufgabe durch ein Transportfahrzeug mit den Merkmalen des Anspruchs 1 sowie durch ein Lager- und Entnahmesystem mit den Merkmalen des Anspruchs 13 und ein Verfahren gemäß Anspruch 15 gelöst.

In erfindungsgemäßer Weise ist zunächst erkannt worden, dass durch geschickte Ausgestaltung der Greifeinrichtung die voranstehende Aufgabe auf überraschend einfache Weise gelöst wird. Hierzu ist die Greifeinrichtung in weiter erfindungsgemäßer Weise ganz konkret zu einer besonders vielseitigen und umfassenden Funktionalität ausgebildet, wonach ein Erfassen des oder der Behälter seitlich außerhalb des Aufnahmeraums und ein Bewegen des oder der Behälter in den Aufnahmeraum und/oder ein Bewegen des oder der Behälter aus dem Aufnahmeraum nach seitlich außerhalb des Aufnahmeraums ermöglicht sind. Hierdurch sind ein flexibles Aufnehmen und gegebenenfalls Zwischenlagern eines oder mehrerer Behälter in dem Aufnahmeraum sowie ein einfaches Positionieren eines oder mehrerer Behälter beispielsweise beim "Ausgraben" tief unten liegender Behälter in einem Blocklager ermöglicht. Dabei kann ein durch die Greifeinrichtung seitlich des Aufnahmeraums erfasster Behälter entweder in den Aufnahmeraum bewegt werden oder es kann ein derart erfasster Behälter ohne ein vorheriges Aufnehmen in den Aufnahmeraum durch beispielsweise ein Verfahren des Transportfahrzeugs an eine für beispielsweise eine Zwischenlagerung geeignete Stelle transportiert werden. Wenn ein oder mehrere übereinander positionierte Behälter in den Aufnahmeraum bewegt sind, ist es möglich, dass das gesamte Transportfahrzeug mit dem oder den im Aufnahmeraum befindlichen Behälter oder Behältern lediglich eine Gitterzelle überdecken. Dadurch werden durch dieses Transportfahrzeug mögliche weitere Transportfahrzeuge bei deren Aufgaben und Tätigkeiten in geringstmöglichem Maß beeinträchtigt, was weiterhin einen besonders effektiven Betrieb eines Transportfahrzeugs und Lager- und Entnahmesystems ergibt.

Folglich sind mit dem erfindungsgemäßen Transportfahrzeug und dem erfindungsgemäßen Lager- und Entnahmesystem ein Transportfahrzeug sowie ein Lager- und Entnahmesystem bereitgestellt, wonach ein besonders schneller und effizienter Zugriff auf beliebige Behälter mit konstruktiv einfachen Mitteln ermöglicht ist.

Im Hinblick auf einen besonders effizienten und einfachen Zugriff auf beliebige Behälter kann die Greifeinrichtung derart ausgebildet sein, dass ein Absetzen des oder der Behälter in dem Aufnahmeraum ermöglicht ist. Bei beispielsweise einem erforderlichen schnellen Verfahren des Transportfahrzeugs wird hierdurch die Greifeinrichtung weniger belastet, da sie den Behälter oder die Behälter während des Verfahrens nicht mehr halten muss. Hierdurch kann sich auch eine Verbesserung der Fahreigenschaften des Transportfahrzeugs ergeben, da ein abgesetzter oder abgesetzte Behälter üblicherweise zu einem niedrigeren Schwerpunkt des Transportfahrzeugs mit verbesserten Fahreigenschaften führt oder führen. Des Weiteren kann die Greifeinrichtung in diesem Zustand gegebenenfalls noch einen oder mehrere weitere Behälter erfassen und damit zusätzlich zu dem oder den bereits im Aufnahmeraum abgesetzten Behälter oder Behältern noch einen weiteren oder mehrere weitere Behälter transportieren, der oder die sich dann im mittels der Greifeinrichtung erfassten Zustand befindet oder befinden.

Weiterhin hinsichtlich eines besonders effizienten und einfachen Zugriffs auf beliebige Behälter kann die Greifeinrichtung derart ausgebildet sein, dass der oder die Behälter horizontal oder seitlich in den Aufnahmeraum bewegt werden können. Hierdurch ist ein besonders direktes und damit zeitsparendes und effektives Bewegen von Behältern ermöglicht, ohne dass diese beispielsweise über das Transportfahrzeug und/oder den Aufnahmeraum geschwenkt werden müssen, bevor sie in einer Transport- oder Aufnahmeposition hinsichtlich des Transportfahrzeugs angelangt sind.

Weiterhin im Hinblick auf einen besonders effizienten Zugriff und Betrieb des Transportfahrzeugs und des Lager- und Entnahmesystems ist die Greifeinrichtung derart ausgebildet, dass der oder die Behälter von verschiedenen Seiten aus, insbesondere von einander gegenüberliegenden Seiten aus, in den Aufnahmeraum bewegt werden können. Hierdurch ist ein hohes Maß an Flexibilität im Hinblick auf den Vorgang des Aufnehmens eines oder mehrerer Behälter in den Aufnahmeraum bereitgestellt, was ein besonders schnelles Zugreifen auf Behälter beispielsweise bei einem "Ausgraben" von tief angeordneten Behältern in einem Blocklager zur Folge hat. Ein Zugang von einander gegenüberliegende Seiten bietet weiterhin die Möglichkeit, dass Behälter auf der einen Seite in den Aufnahmeraum geführt und auf der anderen Seite aus dem Aufnahmeraum heraus bewegt werden. Auch dies ermöglicht ein besonders Zeit sparendes Betreiben eines Transportfahrzeugs und Lager- und Entnahmesystems.

Hinsichtlich einer besonders sicheren und konstruktiv einfachen Ausgestaltung kann die Greifeinrichtung oder ein Modul der Greifeinrichtung mittels einer Führung oder einer Kulisse in horizontaler Richtung geführt oder verschiebbar sein. Dabei kann die Greifeinrichtung oder ein Modul der Greifeinrichtung ein mit dem Fahrwerk oder Aufnahmeraum fest verbundenes Teil und ein hierzu geführtes oder verschiebbares Teil aufweisen, das ein Greifelement zum Erfassen eines oder mehrerer Behälter aufweisen kann. Eine teleskopartige Führung ist möglich. Bei einer Führung der Greifeinrichtung in einer Kulisse kann meist ein Antriebsmotor weniger verwendet werden, als bei einer anderen Art der Führung.

In besonders effizienter Weise kann die Greifeinrichtung einerseits für das Anheben und Absetzen und andererseits für das Bewegen des oder der Behälter unterschiedliche Antriebe aufweist. Dabei können die jeweiligen Antriebe an die jeweils individuell erforderlichen Betriebsweisen und Funktionalitäten in effizienter Weise angepasst sein. In Platz sparender Weise könnte jedoch auch ein gemeinsamer Antrieb für diese beiden Funktionalitäten realisiert sein, um einen besonders kompakten Aufbau des Transportfahrzeugs zu realisieren.

In konkreter Weise kann ein Antrieb für das Anheben und Absetzen des oder der Behälter an einem relativ zu dem Aufnahmeraum und/oder Fahrwerk ortsfesten Teil der Greifeinrichtung oder an einem relativ zu dem Aufnahmeraum und/oder Fahrwerk beweglichen Teil der Greifeinrichtung fixiert ist. Hierbei ist bei der Wahl der Konstruktion auf den jeweiligen Anwendungsfall im Hinblick auf einen einfachen und schnellen Zugriff auf beliebige Behälter abzustellen.

Im Hinblick auf einen besonders vielseitigen Einsatz des Transportfahrzeugs ist der Aufnahmeraum derart dimensioniert, dass mehrere Behälter (optional nebeneinander und) übereinander in dem Aufnahmeraum anordenbar sind. Dies ermöglicht - bei Bedarf - ein Zwischenlagern mehrerer Behälter in dem Aufnahmeraum. Ein Anordnen der Behälter nebeneinander ermöglicht einen individuellen Zugriff auf jeden Behälter, ohne dass vorher andere Behälter umgelagert werden müssen. Ein Anordnen der Behälter übereinander bringt den Vorteil, dass im besten Fall auch bei einem Zwischenlagern mehrerer Behälter im Aufnahmeraum nur eine Gitterzelle durch das Transportfahrzeug abgedeckt und damit für andere Transportfahrzeuge blockiert wird. Eine Anordnung von Behältern nebeneinander und übereinander bietet die Möglichkeit des Zwischenlagerns einer besonders großen Anzahl von Behältern im Aufnahmeraum.

In besonders flexibler Weise kann die Dimensionierung, insbesondere die Höhe, des Aufnahmeraums und damit die Dimensionierung, insbesondere die Höhe, des Transportfahrzeugs variierbar sein, wobei vorzugsweise das Transportfahrzeug eine Linearführung und/oder einen Antrieb zur Variierung der Dimensionierung oder Höhe aufweist. Falls mehrere Behälter nebeneinander und/oder übereinander im Aufnahmeraum gestapelt werden sollen, kann die Dimensionierung und damit die Größe des Aufnahmeraums und des Transportfahrzeugs entsprechend verändert oder vergrößert werden. Dies hat jedoch aufgrund der damit erreichten größeren Dimension den Nachteil einer größeren Trägheit des Transportfahrzeugs für erforderliche Fahrbewegungen zur Folge. Besonders schnelle Bewegungen des Transportfahrzeugs, insbesondere Richtungswechsel, sind hierdurch oft nicht mehr möglich. Wenn im besten Fall jedoch nur ein Behälter im Aufnahmeraum aufzunehmen ist, so kann die Dimensionierung auf eine möglichst geringe Größe variiert oder reduziert werden, wodurch auch besonders schnelle Bewegung des Transportfahrzeugs wieder ermöglicht werden. Insoweit ist es empfehlenswert, die Dimensionierung des Aufnahmeraums und/oder des Transportfahrzeugs derart zu wählen, dass nicht mehr Volumen an Aufnahmeraum als erforderlich bereitgestellt ist. Im Hinblick auf die Veränderung oder Variation der Dimensionierung kommt insbesondere eine Veränderung oder Variation der Höhe infrage, damit beispielsweise das Transportfahrzeug nicht unnötig viele Gitterzellen in einem Blocklager abdeckt oder blockiert. Die Variation der Dimensionierung kann in besonders einfacher Weise über eine Linearführung des Transportfahrzeugs erfolgen, wobei in besonders schneller und daher effizienter Weise ein vorzugsweise elektrischer Antrieb zur Variation der Dimensionierung oder Höhe vorgesehen sein kann.

Weiterhin im Hinblick auf einen besonders schnellen und effizienten Zugriff auf beliebige Behälter kann die Höhe der Greifeinrichtung und/oder eines Greifelements der Greifeinrichtung, beispielsweise ein Haken, variierbar sein, sodass ein Erfassen und/oder ein Absetzen des oder der Behälter in unterschiedlichen vorgebbaren Höhen erfolgen kann. Dabei kann insbesondere bei mehreren übereinander gestapelten Behältern die Höhe der Greifeinrichtung und/oder eines Greifelements der Greifeinrichtung an die Höhenposition des obersten Behälters angepasst oder auf diese Höhenposition variiert oder verfahren werden, um ein sicheres Erfassen des obersten Behälters zu ermöglichen. Nach einem derartigen Erfassen des obersten Behälters kann die Höhe der Greifeinrichtung und/oder eines Greifelements der Greifeinrichtung wieder variiert oder verfahren werden, um den erfassten Behälter gegebenenfalls an eine andere Stelle mit einer anderen Höhenposition zu bewegen.

Die Greifeinrichtung kann auf unterschiedliche Weise mit dem Aufnahmeraum oder dem Fahrwerk gekoppelt werden. Dabei können Greifeinrichtungen unterschiedlicher Größe und Leistungsfähigkeit in alternativer Weise mit dem Aufnahmeraum oder dem Fahrwerk koppelbar sein, um Transportfahrzeuge bereitzustellen, die in individueller Weise an den jeweiligen Anwendungsfall angepasst sind. Der Aufnahmeraum kann grundsätzlich durch einen Rahmen gebildet sein, der den Aufnahmeraum mit seinen Rahmenelementen bildet oder begrenzt. Grundsätzlich kann die Greifeinrichtung in oder an einem oberen Bereich des Aufnahmeraums gelagert sein, wobei die Greifeinrichtung beispielsweise mit einem derartigen Rahmen gekoppelt werden kann. Alternativ hierzu kann die Greifeinrichtung einen oberen Bereich oder oberen Abschluss des Aufnahmeraums bilden. Das bedeutet, das mindestens ein Bereich der Greifeinrichtung zur Begrenzung des Aufnahmeraums beiträgt.

Weiterhin im Hinblick auf einen besonders schnellen und effizienten Zugriff auf beliebige Behälter kann ein Antrieb für das Transportfahrzeug - insbesondere im Bereich des Fahrwerks - unterhalb des Aufnahmeraums angeordnet sein. Dieser Antrieb, der zum Bewegen des Transportfahrzeugs oder zum Antreiben von Rädern des Transportfahrzeugs dient, kann quasi in das Fahrwerk integriert sein. Die Anordnung des Antriebs unterhalb des Aufnahmeraums hat einen besonders tiefen Schwerpunkt des Transportfahrzeugs und damit ein besonders sicheres Fahren des Transportfahrzeugs zur Folge, wobei auch bei einer Beladung mit mehreren Behältern das Risiko eines Umkippens des Transportfahrzeugs vermindert wird.

Ebenfalls zur Gewährleistung eines besonders schnellen und effizienten Zugriffs auf beliebige Behälter kann das Transportfahrzeug derart ausgebildet sein, dass es bei eingefahrener Greifeinrichtung 1 bis 1,5 Gitterzellen eines Lager- und Entnahmesystems überdeckt. Hierdurch ist ein Blockieren oder Behindern möglicher weiterer Transportfahrzeuge beispielsweise bei einem Blocklager im Vergleich mit bekannten Transportfahrzeugen signifikant vermindert.

Weiterhin im Hinblick auf einen besonders schnellen und effizienten Zugriff auf beliebige Behälter kann das Lager- und Entnahmesystem eine zentrale oder direkte/dezentrale Steuereinrichtung zur Steuerung der Bewegung eines oder mehrerer Behälter - insbesondere bei Vorhandensein mehrerer Transportfahrzeuge - aufweisen. Bei der Wahl der Ausgestaltung der Steuereinrichtung kann auf den individuellen Anwendungsfall abgestellt werden.

Bei Ausführungsbeispielen des erfindungsgemäßen Transportfahrzeugs und des erfindungsgemäßen Lager- und Entnahmesystems kann das Transportfahrzeug Behälter neben einem einfach aufgebauten Fahrwerk anheben und diese Behälter dann mithilfe eines zusätzlichen Antriebs und/oder Führungen seitlich in das Transportfahrzeug einfahren.

Bedeutsame Vorteile von Ausführungsbeispielen des erfindungsgemäßen Transportfahrzeugs und des erfindungsgemäßen Lager- und Entnahmesystems sind beispielsweise:
- Das Transportfahrzeug kann auf beiden Seiten ohne eine Fahrzeugbewegung Behälter aufnehmen und absetzen, was ein sehr effizientes "Ausgraben" von Behältern in einem Blocklager ermöglicht.
- Der Fahrzeugschwerpunkt ist bei einem unterhalb des Aufnahmeraums angeordneten Fahrwerk und Antrieb im Vergleich mit bekannten Transportfahrzeugen, welche die Behälter in das Transportfahrzeug heben und den Antrieb oder die Antriebstechnik darüber aufweisen, weit unten.
- Ein einfacher Aufbau des Antriebs oder der Antriebseinheit ist möglich, da viel Platz vorhanden ist und kein Platz durch den Aufnahmeraum im Antriebsbereich verbraucht wird, der gegebenenfalls umbaut werden muss.
- Ein Absetzen des Behälters im Transportfahrzeug bzw. Aufnahmeraum entlastet die Greifeinrichtung während einer hochdynamischen Fahrt des Transportfahrzeugs auf einem Gitter eines Blocklager.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche und andererseits auf die nachfolgende Erläuterung bevorzugter Ausführungsbeispiele des erfindungsgemäßen Transportfahrzeugs sowie des erfindungsgemäßen Lager- und Entnahmesystems anhand der Zeichnung zu verweisen. In Verbindung mit der Erläuterung der bevorzugten Ausführungsbeispiele anhand der Zeichnung werden auch im Allgemeinen bevorzugte Ausgestaltungen und Weiterbildungen der Lehre erläutert. In der Zeichnung zeigen
- Fig. 1: in einer schematischen Seitenansicht ein Ausführungsbeispiel des erfindungsgemäßen Transportfahrzeugs auf einer Gitterstruktur eines Lager-und Entnahmesystems für Behälter in zwei unterschiedlichen Betriebszuständen,
- Fig. 2: in einer schematischen Seitenansicht ein weiteres Ausführungsbeispiel des erfindungsgemäßen Transportfahrzeugs auf einer Gitterstruktur eines Lager- und Entnahmesystems für Behälter,
- Fig. 3: in einer perspektivischen Darstellung das Ausführungsbeispiel des Transportfahrzeugs aus Fig. 2 auf einer Gitterstruktur eines Lager- und Entnahmesystems für Behälter,
- Fig. 4: in einer perspektivischen Darstellung das Ausführungsbeispiel des Transportfahrzeugs aus Fig. 1 und
- Fig. 5: in einer perspektivischen Darstellung das Ausführungsbeispiel des Transportfahrzeugs aus den Fig. 1 und 4 auf einer Gitterstruktur eines Lager-und Entnahmesystems für Behälter.

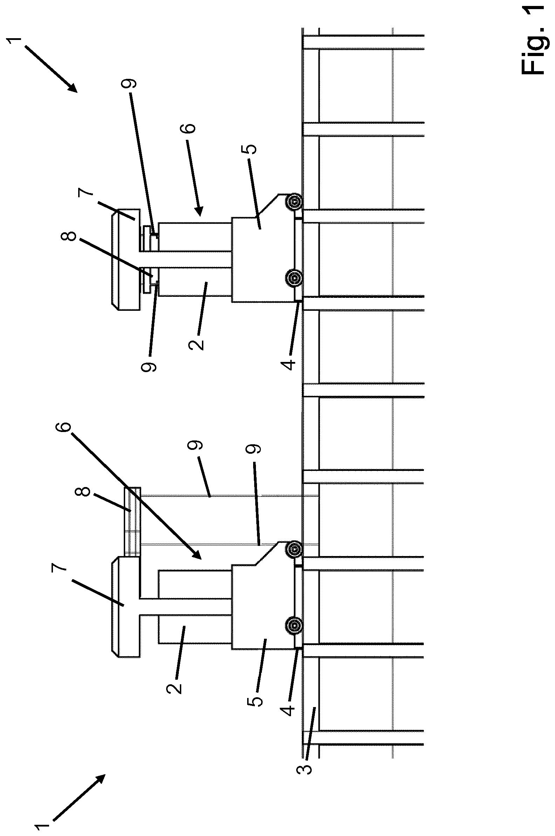

Fig. 1 zeigt in einer schematischen Seitenansicht ein Ausführungsbeispiel des erfindungsgemäßen Transportfahrzeugs 1 zum Einsatz in einem Lager- und Entnahmesystem für Behälter 2. Dabei ist das Transportfahrzeug 1 auf einer Gitterstruktur 3 des hier als Blocklager ausgebildeten Lager- und Entnahmesystems angeordnet.

Das Transportfahrzeug 1 weist ein Fahrwerk 4 mit einem Antrieb 5 auf, wobei das Fahrwerk 4 und der Antrieb 5 als eine Einheit in einem unteren Bereich des Transportfahrzeugs 1 ausgebildet sind, um einen möglichst niedrigen Schwerpunkt des Transportfahrzeugs 1 bereitzustellen. Weiterhin weist das Transportfahrzeug 1 einen oberhalb des Fahrwerks 4 ausgebildeten Aufnahmeraum 6 für einen Behälter 2 sowie eine Greifeinrichtung 7 zum Erfassen, Bewegen und Absetzen eines Behälters 2 auf. Die Greifeinrichtung 7 ist derart ausgebildet, dass ein Erfassen des Behälters 2 seitlich außerhalb des Aufnahmeraums 6 und ein Bewegen des Behälters 2 in den Aufnahmeraum 6 ermöglicht ist. Des Weiteren ist die Greifeinrichtung 7 derart ausgebildet, dass ein Bewegen des Behälters 2 aus dem Aufnahmeraum 6 nach seitlich außerhalb des Aufnahmeraums 6 ermöglicht ist. Im Ergebnis kann der Behälter 2 mittels der Greifeinrichtung 7 in den Aufnahmeraum 6 und aus dem Aufnahmeraum 6 heraus bewegt werden.

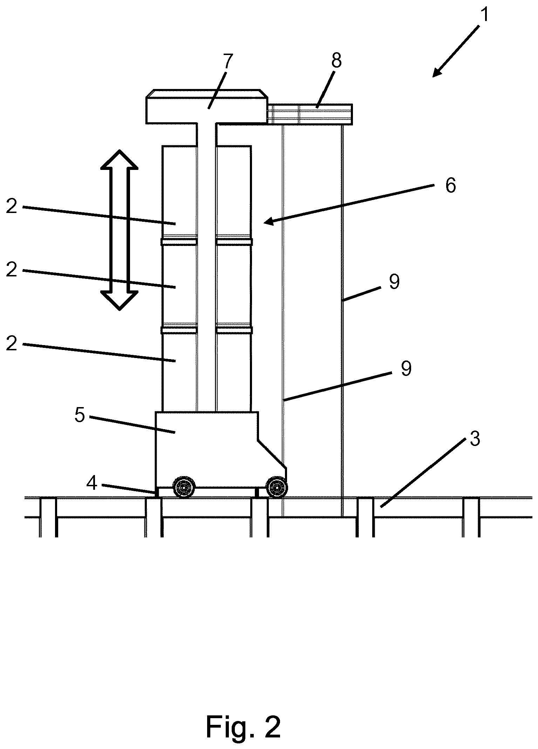

Fig. 2 zeigt in einer schematischen Seitenansicht ein weiteres Ausführungsbeispiel des erfindungsgemäßen Transportfahrzeugs 1 auf einer Gitterstruktur 3 eines Lager- und Entnahmesystems für Behälter 2. Bei diesem Ausführungsbeispiel ist der Aufnahmeraum 6 derart dimensioniert, dass mehrere Behälter 2 - hier im Konkreten drei Behälter 2 - im Aufnahmeraum 6 übereinander gestapelt werden können. Hierzu ist die Greifeinrichtung 7 in ihrer Höhe einstellbar, was durch den links neben dem Transportfahrzeug 1 gezeigten Doppelpfeil angedeutet ist. Je nach Anzahl der aufzunehmenden Behälter 2 kann die Greifeinrichtung 7 in ihrer Höhe verfahren werden, wozu das Transportfahrzeug 1 eine hier der Einfachheit halber nicht gezeigte Führung für die Greifeinrichtung 7 aufweist.

Der Fig. 1 ist entnehmbar, dass die Greifeinrichtung 7 ein horizontal verschiebbares Element 8 aufweist, das mit LAM, Lastaufnahmemittel, gekennzeichnet ist. An dem Element 8 sind hier schematisch dargestellte Greifelemente 9 zum Erfassen eines oder mehrerer Behälter 2 angeordnet. Das Element 8 ist auch bei dem in Fig. 2 gezeigten Ausführungsbeispiel in gleicher Weise horizontal verschiebbar und weist entsprechend dimensionierte Greifelemente 9 auf.

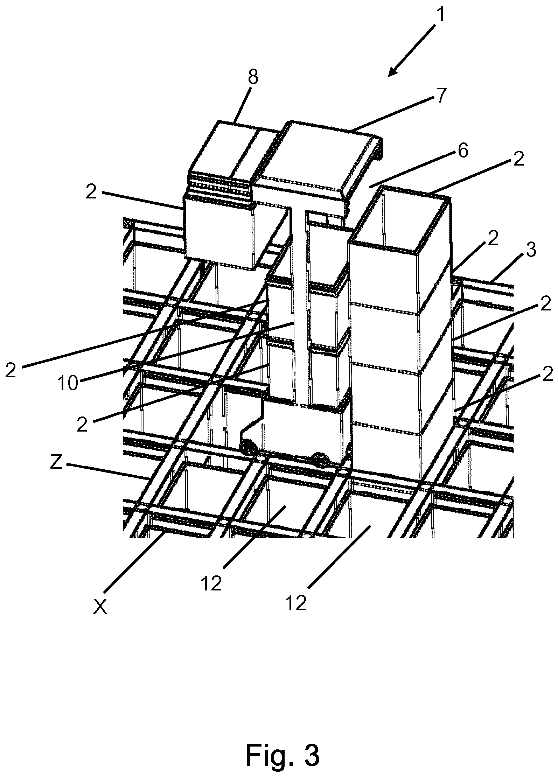

Fig. 3 zeigt in einer perspektivischen Darstellung das Ausführungsbeispiel des Transportfahrzeugs 1 aus Fig. 2 auf einer Gitterstruktur 3 eines Lager- und Entnahmesystems für Behälter 2. In dieser Fig. 3 ist erkennbar, dass die Greifeinrichtung 7 mit dem Element 8 sowohl links als auch rechts neben dem Transportfahrzeug 1 Behälter 2 erfassen und bewegen kann. Hierzu kann das Element 8 nicht nur nach einer Seite horizontal ausgefahren werden, sondern auch auf die entgegengesetzte Seite. Der Aufnahmeraum 6 ist dabei oben durch die Greifeinrichtung 7 begrenzt. Eine Verfahrmöglichkeit der Greifeinrichtung 7 mit dem Element 8 kann entlang einer Säule 10 des Transportfahrzeugs 1 erfolgen. Die Säule 10 kann einen Teleskopmechanismus oder eine Linearführung zum Bewegen der Greifeinrichtung 7 nach oben und nach unten aufweisen. Je nach Höhenposition der Greifeinrichtung 7 ergibt sich ein unterschiedlich dimensionierter Aufnahmeraum 6 für einen oder mehrere Behälter 2. So kann aus dem in Fig. 1 gezeigten Ausführungsbeispiel des Transportfahrzeugs 1 das in den Fig. 2 und 3 gezeigte Ausführungsbeispiel des Transportfahrzeugs 1 - lediglich durch ein Verfahren der Greifeinrichtung 7 nach oben - gebildet werden.

Des Weiteren ist in Fig. 3 besonders gut erkennbar, dass Behälter 2 in dem Aufnahmeraum 6 und damit im Transportfahrzeug 1 abgesetzt werden können. Das Transportfahrzeug 1 kann mit seiner Greifeinrichtung 7 - alternativ oder zusätzlich hierzu - auch zum Stapeln oder Umstapeln von Behältern 2 neben dem Transportfahrzeug 1 genutzt werden.

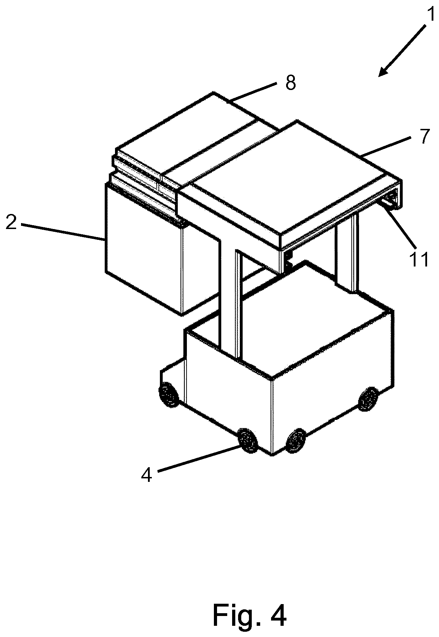

Fig. 4 zeigt in einer perspektivischen Darstellung das Ausführungsbeispiel des Transportfahrzeugs aus Fig. 1. Auch hier ist gut erkennbar, dass das Element 8 der Greifeinrichtung 7 an zwei gegenüberliegenden Seiten des Transportfahrzeugs 1 ausgefahren werden kann. Hierzu dient eine Führung 11 der Greifeinrichtung 7.

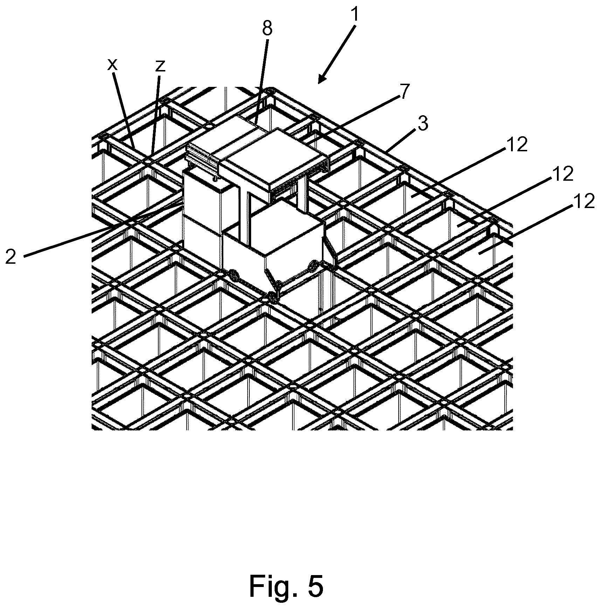

Fig. 5 zeigt in einer perspektivischen Darstellung das Ausführungsbeispiel des Transportfahrzeugs 1 aus den Fig. 1 und 4 auf einer Gitterstruktur 3 eines Lager-und Entnahmesystems für Behälter 2.

Die Fahrwerke 4 sämtlicher hier gezeigte Ausführungsbeispiele des Transportfahrzeugs 1 sind derart ausgelegt, dass die Transportfahrzeuge 1 als bidirektionale Transportfahrzeuge 1 und zum Fahren in zueinander senkrechten Richtungen ausgebildet sind.

Gemäß den Fig. 3 und 5 sind Gitterstrukturen 3 eines Ausführungsbeispiels eines erfindungsgemäßen Lager- und Entnahmesystems für Behälter 2 besonders detailliert dargestellt. Die Gitterstrukturen 3 weisen eine Vielzahl von Gitterzellen 12 auf, wobei jede Gitterzelle 12 eine Lagersäule einer unterhalb der Gitterstruktur 3 angeordneten Behälter-Lagerstruktur definiert. Diese Lagersäulen sind eingerichtet, jeweils einen vertikalen Stapel von Behältern 2 aufzunehmen, wobei die Gitterstruktur 3 Längstransportwege in einer Längsrichtung X und Quertransportwege in einer Querrichtung Z definiert. Sämtliche Transportfahrzeuge 1 können sowohl vorwärts und rückwärts als auch in X-Richtung und in Z-Richtung fahren.

Ausführungsformen im Hinblick auf die zuvor erläuterten Ausführungsbeispiele und deren Vorteile werden im Folgenden nochmals besonders erläutert und/oder ergänzt:
Die Höhe des Transportfahrzeugs 1 kann größer sein als nur die Höhe eines Behälters 2, um gegebenenfalls mehrere Behälter 2 übereinander gestapelt im Aufnahmeraum 6 aufzunehmen oder abzusetzen. Das Transportfahrzeug 1 kann jedoch auch als Transportfahrzeug 1 mit unveränderbar Dimensionierung, d. h. beispielsweise mit einem Aufnahmeraum 6 für nur einen Behälter 2 oder auch für eine andere fixierte Anzahl an Behältern 2, ausgebildet sein. Dabei können mehrere Behälter 2 aufgenommen und gegebenenfalls neben dem Transportfahrzeug 1 aufgetürmt werden, um das "Ausgraben" effizienter zu gestalten.

Die Höhe des Transportfahrzeugs 1 von beispielsweise mehr als nur einen Behälter 2 kann aktiv durch das Transportfahrzeug 1 variiert werden, um mehrere Behälter 2 aufzunehmen und gegebenenfalls neben dem Transportfahrzeug 1 aufzutürmen. Hierzu kann eine Linearführung mit einem vorzugsweise elektrischen Antrieb vorgesehen sein, um die Höhe zu variieren. Ein niedrigeres Transportfahrzeug 1 ermöglicht mit einem oder wenigen Behältern 2 eine hohe Dynamik des Transportfahrzeugs 1 mit einer schnellen Versorgung eines Arbeitsplatzes. Im Gegensatz hierzu kann ein hohes Transportfahrzeug 1 langsam viele Behälter 2 transportieren. Ein "Aushub" aus einem Lager- und Entnahmesystem kann hierbei sehr platzsparend übereinander im oder neben dem ausgegrabenen Schacht zwischengelagert werden, um ein schnelles "Ausgraben" und damit einen schnellen Zugriff zu einem gewünschten Behälter 2 zu ermöglichen.

Ein "Aushub" kann neben und/oder im Aufnahmeraum 6 des Transportfahrzeugs 1 in mehreren Etagen aufgetürmt werden. Dabei können aber müssen nicht viele Behälter 2 auf einmal gegriffen werden, sondern es kann stets ein Behälter 2 nach dem anderen bewegt werden. Insbesondere ein derartiges Auftürmen kann mit mehr als einem Transportfahrzeug durchgeführt werden.

Die Greifeinrichtung 7 weist einen horizontalen Ausfahrmechanismus zum Ausfahren des Elements 8 auf. Der Ausfahrmechanismus des Transportfahrzeugs 1 befindet sich am Kopf des Transportfahrzeugs 1 über den Steuerungen und Energiespeichern des Transportfahrzeugs 1, die im Bereich des Antriebs 5 oder des Fahrwerks 4 angeordnet sind.

Der Ausfahrmechanismus bewegt das Element 8 oder Greifer-Modul, wobei das Element 8 oder Greifer-Modul einen Motor, Zahnriemen und Rollen aufweist, welche durch das Auf- und Abwickeln von Stahlbändern den Greifer oder das Greifelement 9 des Fahrzeugs heben und senken. Das Element 8 oder Greifer-Modul kann durch den Ausfahrmechanismus über das Transportfahrzeug 1 oder einen benachbarten Schacht bewegt werden, um Behälter 2 aufzunehmen oder abzusetzen.

Der Ausfahrmechanismus wird durch Linearführungen oder Führungen 11 gelagert, welche als Vollauszug ausgeführt sind. Die Linearführungen können hierfür neben oder über dem Hubmodul oder Greifelement 9 angebracht werden, wobei auch die Anordnung der Führungselemente neben- oder übereinander möglich ist. Beispiele für die Linearführungen sind Schubladenauszüge, Kugelumlaufschlitten, Gleitleisten und weitere.

Der Antrieb zum seitlichen Verfahren des Elements 8 oder Greifelements 9 durch den Ausfahrmechanismus erfolgt über eine Zahnstange, die durch einen Riemen angetrieben wird, welcher wiederum von einem Motor bewegt wird. Alternativ können hierfür auch Zahnräder, Seilzüge, Omega-Antriebe, Linearmotoren oder weitere Systeme eingesetzt werden.

Der Antrieb kann über, neben oder unter dem Element 8 oder Hubmodul positioniert sein oder in dieses integriert sein. Der Antrieb ist entweder am Transportfahrzeug 1 angebracht oder fährt zusammen mit dem Element 8 oder Hubmodul aus.

Die Positionierung erfolgt über zwei Lichtschranken als Referenzpunkte und einen Inkrementalwertgeber im Antrieb. Alternativen hierzu sind Absolutwertgeber, optische Distanzsensoren - Laser, IR -, akustische Distanzsensoren, beispielsweise Ultraschallsensoren, Seilzug-Wegsensoren, andere Formen von Inkrementalgebern oder das einfache Anfahren der Endlagen durch Endlagesensoren - Taster, Lichtschranken, Initiatoren usw.

Die Versorgungs- und Steuerungskabel des Elements 8 oder Hubmoduls werden durch eine Energiekette vom festen Fahrzeugteil zum beweglichen Element 8 oder Hubmodul geführt. Alternativ hierzu sind Schleifleitungen, ungeführte Kabel, Funkverbindungen und mitgeführte Kurzzeitenergiespeicher vorstellbar.

Wesentliche Elemente von Ausführungsbeispielen der erfindungsgemäßen lassen sich wie folgt angeben:
- Die Greifeinrichtung 7 kann einen obersten Behälter 2 in einem Schacht anheben, indem vertikal ein Greifelement 9 abgelassen wird.
- Die Greifeinrichtung 7 kann einen über die Gitterstruktur 3 angehobenen Behälter 2 horizontal zum Transportfahrzeug 1 verfahren.
- Die Greifeinrichtung 7 oder ein Element 8 der Greifeinrichtung 7 kann auch auf beiden Seiten ausfahren und auf beiden Seiten das Greifelement 9 ablassen.
- Eingefahren kann das Transportfahrzeug 1 bis 1,5 Gitterzellen 12 belegen.
- Die Greifeinrichtung 7 oder das Greifelement 9 kann den Behälter 2 im Transportfahrzeug 1 im eingefahrenen Zustand absetzen.
- Das Ausfahren kann über eine beidseitige angeordnete Führung 11 und einen Motor oder Antrieb umgesetzt werden.
- Der Motor oder Antrieb der Greifeinrichtung 7 kann mitfahrend auf dem horizontal ausfahrenden Element 8 fest angeordnet sein.
- Der Motor oder Antrieb auf oder in der Greifeinrichtung 7 kann fest auf dem Transportfahrzeug 1 angeordnet sein.
- Das Transportfahrzeug 1 kann mehr als nur einen Behälter 2 innerhalb des Transportfahrzeugs 1 oder Aufnahmeraums 6 absetzen.
- Es kann nacheinander je ein Behälter 2 gegriffen und dann übereinander neben dem Transportfahrzeug 1 und/oder im Transportfahrzeug 1 abgesetzt werden.
- Neben einem Schacht mit einem tiefliegenden Behälter 2 kann sich mehr als ein Transportfahrzeug 1 positionieren.
- Die Mehrzahl an Transportfahrzeugen 1 oder sämtliche Transportfahrzeuge 1 können die Bewegung der Behälter 2 über eine zentrale oder direkte/dezentrale Steuerung koordinieren.
- Der gewünschte tiefliegende Behälter 2 kann von einem weiteren Transportfahrzeug 1, das nicht am Graben beteiligt ist, abtransportiert werden.
- Das Transportfahrzeug 1 kann fix eine Höhe für eine Kapazität von mehr als einem Behälter 2 aufweisen.
- Das Transportfahrzeug 1 kann eine variable Höhe für eine Kapazität von einem oder mehr als einem Behälter 2 aufweisen, die durch ein aktives Ausfahren einer Säule 10 oder eines Transportfahrzeugturms realisiert werden kann.

Ein Verfahren zum Zugreifen auf einen Behälter 2 in einem Lager- und Entnahmesystem, wobei mindestens ein Transportfahrzeug 1 eingesetzt wird, kann wie folgt durchgeführt werden:
Das hier erläuterte beispielhafte Verfahren arbeitet mit zwei Transportfahrzeugen 1 - hier der besseren Unterscheidbarkeit halber T1 und T2 genannt -, die zum Umladen von Behältern 2 geeignet sind. Die Räumung eines Schachts oder einer Lagersäule - diese beiden Begriffe "Schacht" und "Lagersäule" werden hier synonym verwendet - erfolgt also hier mit zwei Transportfahrzeugen 1. Es können jedoch auch mehr als zwei Transportfahrzeuge 1 verwendet werden. Daher kann die folgende Beschreibung in analoger Weise auch auf ein Ausführungsbeispiel mit mehr als zwei Transportfahrzeugen 1 gelesen werden.

### Ausgangssituation:

Betrachtet wird ein Lager- und Entnahmesystem in Form eines Blocklagers mit sehr hoher Auslastung. Es soll der 15. Behälter 2 von oben eines Schachts S1 ausgelagert werden, alle umliegenden Schächte sind bis zur Fahrbahnhöhe befüllt.

### Verfahrensbeschreibung:

1. Zwei Transportfahrzeuge T1 und T2 positionieren sich neben dem Schacht S1.
2. Ein Transportfahrzeug T1 entnimmt den obersten Behälter des Schachts S1.
3. Während dieses Transportfahrzeug T1 den Behälter auf der anderen Fahrzeugseite auf den dort lagernden Behälter im Schacht S2 abstellt, greift das 2. Transportfahrzeug T2 den nun obersten Behälter des Schachts S1.
4. Das Transportfahrzeug T2 stellt den Behälter in Schacht S3, welcher seinerseits auf der anderen Fahrzeugseite von T2 liegt. T1 entnimmt derweil den nächsten Behälter aus S1 und stellt ihn auf S2.
5. Der Vorgang wird fortgesetzt bis jeweils vier Behälter auf die Schächte S2 und S3 abgestellt wurden.
6. Die Transportfahrzeuge T1 und T2 entnehmen nacheinander jeweils drei weitere Behälter und stellen diese auf der Ladefläche des Fahrzeugs ab.
7. Das Transportfahrzeug T1 oder T2 fährt ein Feld in Z-Richtung, um den Zugriff auf S1 für ein weiteres Transportfahrzeug T3 freizugeben, das lediglich eine Transportfunktion und keine Umladeaufgabe hat. Dieses fährt auf die frei gewordene Position und entnimmt den anfangs gewünschten Behälter 2 aus dem Schacht S1.
8. Das Transportfahrzeug T3 transportiert den Behälter zum definierten Übergabepunkt während die Transportfahrzeuge T1 und T2 die zuvor umgestapelten Behälter zurück in den Schacht S1 stapeln.

Hinsichtlich weiterer vorteilhafter Ausgestaltungen der erfindungsgemäßen Lehre wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

### Bezugszeichenliste

- 1: Transportfahrzeug
- 2: Behälter
- 3: Gitterstruktur
- 4: Fahrwerk
- 5: Antrieb
- 6: Aufnahmeraum
- 7: Greifeinrichtung
- 8: Element
- 9: Greifelemente
- 10: Säule
- 11: Führung
- 12: Gitterzelle

## Patentansprüche

1. Transportfahrzeug (1) zum Einsatz in einem Lager- und Entnahmesystem für Behälter (2), umfassend:
ein Fahrwerk (4), wobei das Fahrwerk (4) zum Fahren auf einer Gitterstruktur (3) des Lager- und Entnahmesystems ausgebildet ist, wobei die Gitterstruktur (3) Längstransportwege in einer Längsrichtung X und Quertransportwege in einer Querrichtung Z definiert,
einen oberhalb des Fahrwerks (4) ausgebildeten Aufnahmeraum (6) für einen oder mehrere Behälter (2) und
eine Greifeinrichtung (7) zum Erfassen, Bewegen und Absetzen eines oder mehrerer Behälter (2),
wobei die Greifeinrichtung (7) derart ausgebildet ist, dass ein Erfassen des oder der Behälter (2) seitlich außerhalb des Aufnahmeraums (6) und ein Bewegen des oder der Behälter (2) in den Aufnahmeraum (6) und ein Bewegen des oder der Behälter (2) aus dem Aufnahmeraum (6) nach seitlich außerhalb des Aufnahmeraums (6) ermöglicht sind, **dadurch gekennzeichnet, dass**
der Behälter (2) mittels der Greifeinrichtung (7) in den Aufnahmeraum (6) und aus dem Aufnahmeraum (6) heraus bewegbar ist, und dass der oder die Behälter (2) von verschiedenen Seiten aus in den Aufnahmeraum (6) bewegt werden können, und wobei der Aufnahmeraum (6) derart dimensioniert ist, dass mehrere Behälter (2) übereinander in dem Aufnahmeraum (6) anordenbar sind.

2. Transportfahrzeug (1) nach Anspruch 1, **dadurch gekennzeichnet, dass** die Greifeinrichtung (7) derart ausgebildet ist, dass ein Absetzen des oder der Behälter (2) in dem Aufnahmeraum (6) ermöglicht ist.

3. Transportfahrzeug (1) nach Anspruch 1 oder 2, **dadurch gekennzeichnet, dass** die Greifeinrichtung (7) derart ausgebildet ist, dass der oder die Behälter (2) horizontal oder seitlich in den Aufnahmeraum (6) bewegt werden können.

4. Transportfahrzeug (1) nach einem der Ansprüche 1 bis 3, **dadurch gekennzeichnet, dass** die Greifeinrichtung (7) derart ausgebildet ist, dass der oder die Behälter (2) von einander gegenüberliegenden Seiten aus in den Aufnahmeraum (6) bewegt werden können.

5. Transportfahrzeug (1) nach einem der Ansprüche 1 bis 4, **dadurch gekennzeichnet, dass** die Greifeinrichtung (7) oder ein Modul der Greifeinrichtung (7) mittels einer Führung (11) oder einer Kulisse in horizontaler Richtung geführt oder verschiebbar ist.

6. Transportfahrzeug (1) nach einem der Ansprüche 1 bis 5, **dadurch gekennzeichnet, dass** die Greifeinrichtung (7) einerseits für das Anheben und Absetzen und andererseits für das Bewegen des oder der Behälter (2) unterschiedliche Antriebe aufweist.

7. Transportfahrzeug (1) nach einem der Ansprüche 1 bis 6, **dadurch gekennzeichnet, dass** ein Antrieb für das Anheben und Absetzen des oder der Behälter (2) an einem relativ zu dem Aufnahmeraum (6) und/oder Fahrwerk (4) ortsfesten Teil der Greifeinrichtung (7) oder an einem relativ zu dem Aufnahmeraum (6) und/oder Fahrwerk (4) beweglichen Teil der Greifeinrichtung (7) fixiert ist.

8. Transportfahrzeug (1) nach einem der Ansprüche 1 bis 7, **dadurch gekennzeichnet, dass** der Aufnahmeraum (6) derart dimensioniert ist, dass mehrere Behälter (2) nebeneinander in dem Aufnahmeraum (6) anordenbar sind.

9. Transportfahrzeug (1) nach einem der Ansprüche 1 bis 8, **dadurch gekennzeichnet, dass** die Dimensionierung, insbesondere die Höhe, des Aufnahmeraums (6) und damit die Dimensionierung, insbesondere die Höhe, des Transportfahrzeugs (1) variierbar ist, wobei vorzugsweise das Transportfahrzeug (1) eine Linearführung und/oder einen Antrieb zur Variierung der Dimensionierung oder Höhe aufweist.

10. Transportfahrzeug (1) nach einem der Ansprüche 1 bis 9, **dadurch gekennzeichnet, dass** die Höhe der Greifeinrichtung (7) und/oder eines Greifelements (9) der Greifeinrichtung (7) variierbar ist, sodass ein Erfassen des oder der Behälter (2) in unterschiedlichen vorgebbaren Höhen erfolgen kann.

11. Transportfahrzeug (1) nach einem der Ansprüche 1 bis 10, **dadurch gekennzeichnet, dass** die Greifeinrichtung (7) in oder an einem oberen Bereich des Aufnahmeraums (6) gelagert ist oder einen oberen Bereich oder oberen Abschluss des Aufnahmeraums (6) bildet.

12. Transportfahrzeug (1) nach einem der Ansprüche 1 bis 11, **dadurch gekennzeichnet, dass** ein Antrieb (5) für das Transportfahrzeug (1) - insbesondere im Bereich des Fahrwerks (4) - unterhalb des Aufnahmeraums (6) angeordnet ist.

13. Lager- und Entnahmesystem für Behälter (2), umfassend:
eine Gitterstruktur (3) mit einer Vielzahl von Gitterzellen (12), wobei jede Gitterzelle (12) eine Lagersäule einer unterhalb der Gitterstruktur (3) angeordneten Behälter-Lagerstruktur definiert, wobei die Lagersäulen eingerichtet sind, jeweils einen vertikalen Stapel von Behältern (2) aufzunehmen, wobei die Gitterstruktur (3) Längstransportwege in einer Längsrichtung (x) und Quertransportwege in einer Querrichtung (z) definiert und wobei das Lager- und Entnahmesystem mindestens ein Transportfahrzeug (1) nach einem der Ansprüche 1 bis 12 aufweist.

14. Lager- und Entnahmesystem nach Anspruch 13, **dadurch gekennzeichnet, dass** das Transportfahrzeug (1) derart ausgebildet ist, dass es bei eingefahrener Greifeinrichtung 1 bis 1,5 Gitterzellen (12) überdeckt.

15. Verfahren zum Zugreifen auf einen Behälter (2) in einem Lager- und Entnahmesystem, wobei mindestens ein Transportfahrzeug (1) nach einem der Ansprüche 1 bis 12 eingesetzt wird.

## Claims

1. A transport vehicle (1) for use in a storage and retrieval system for containers (2), comprising:
a chassis (4), wherein the chassis (4) is designed to travel on a grid structure (3) of the storage and retrieval system, wherein the grid structure (3) defines longitudinal transport paths in a longitudinal direction X and transverse transport paths in a transverse direction Z,
a receiving space (6) formed above the chassis (4) for one or more containers (2) and
a gripping device (7) for gripping, moving and depositing one or more containers (2),
wherein the gripping device (7) is designed in such a manner that gripping of the container or containers (2) laterally outside the receiving space (6) and moving of the container or containers (2) into the receiving space (6) and moving of the container or containers (2) out of the receiving space (6) to laterally outside the receiving space (6) are made possible, **characterized in that**
the container (2) can be moved into the receiving space (6) and out of the receiving space (6) by means of the gripping device (7), and **in that** the container or containers (2) can be moved into the receiving space (6) from different sides, and wherein the receiving space (6) is dimensioned in such a manner that multiple containers (2) can be arranged one above the other in the receiving space (6).

2. The transport vehicle (1) according to claim 1, **characterized in that** the gripping device (7) is designed in such a manner that depositing of the container or containers (2) in the receiving space (6) is made possible.

3. The transport vehicle (1) according to claim 1 or 2, **characterized in that** the gripping device (7) is designed in such a manner that the container or containers (2) can be moved horizontally or laterally into the receiving space (6).

4. The transport vehicle (1) according to any one of claims 1 to 3, **characterized in that** the gripping device (7) is designed in such a manner that the container or containers (2) can be moved into the receiving space (6) from opposite sides.

5. The transport vehicle (1) according to any one of claims 1 to 4, **characterized in that** the gripping device (7) or a module of the gripping device (7) is guided or movable in the horizontal direction by means of a guide (11) or a slotted link.

6. The transport vehicle (1) according to any one of claims 1 to 5, **characterized in that** the gripping device (7) has different drives for lifting and depositing on the one hand and for moving the container or containers (2) on the other hand.

7. The transport vehicle (1) according to one of claims 1 to 6, **characterized in that** a drive for lifting and depositing the container or containers (2) is fixed to a part of the gripping device (7) which is stationary relative to the receiving space (6) and/or chassis (4), or to a part of the gripping device (7) which is movable relative to the receiving space (6) and/or chassis (4).

8. The transport vehicle (1) according to any one of claims 1 to 7, **characterized in that** the receiving space (6) is dimensioned in such a manner that multiple containers (2) can be arranged next to one another in the receiving space (6).

9. The transport vehicle (1) according to any one of claims 1 to 8, **characterized in that** the dimensioning, in particular the height, of the receiving space (6) and thus the dimensioning, in particular the height, of the transport vehicle (1) can be varied, wherein the transport vehicle (1) preferably has a linear guide and/or a drive for varying the dimensioning or height.

10. The transport vehicle (1) according to any one of claims 1 to 9, **characterized in that** the height of the gripping device (7) and/or of a gripping element (9) of the gripping device (7) can be varied so that the container or containers (2) can be gripped at different predeterminable heights.

11. The transport vehicle (1) according to any one of claims 1 to 10, **characterized in that** the gripping device (7) is mounted in or on an upper region of the receiving space (6) or forms an upper region or upper end of the receiving space (6).

12. The transport vehicle (1) according to any one of claims 1 to 11, **characterized in that** a drive (5) for the transport vehicle (1) is arranged below the receiving space (6), in particular in the region of the chassis (4)

13. A storage and retrieval system for containers (2), comprising:
a grid structure (3) with a plurality of grid cells (12), wherein each grid cell (12) defines a storage column of a container storage structure arranged below the grid structure (3), wherein the storage columns are configured to each accommodate a vertical stack of containers (2), wherein the grid structure (3) defines longitudinal transport paths in a longitudinal direction (x) and transverse transport paths in a transverse direction (z), and wherein the storage and retrieval system has at least one transport vehicle (1) according to any one of claims 1 to 12.

14. The storage and retrieval system according to claim 13, **characterized in that** the transport vehicle (1) is designed in such a manner that it covers 1 to 1.5 grid cells (12) when the gripping device is retracted.

15. A method for accessing a container (2) in a storage and retrieval system, wherein at least one transport vehicle (1) according to any one of claims 1 to 12 is used.

## Revendications

1. Véhicule de transport (1) destiné à être utilisé dans un système de stockage et de prélèvement de récipients (2), comprenant :
un châssis (4), le châssis (4) étant conçu pour se déplacer sur une structure de grille (3) du système de stockage et de prélèvement, la structure de grille (3) définissant des trajets de transport longitudinaux dans une direction longitudinale X et des trajets de transport transversaux dans une direction transversale Z,
un espace de réception (6) réalisé au-dessus du châssis (4) pour un ou plusieurs récipients (2) et
un dispositif de préhension (7) destiné à saisir, déplacer et déposer un ou plusieurs récipients (2),
dans lequel le dispositif de préhension (7) est réalisé de sorte qu'une saisie du ou des récipients (2) latéralement à l'extérieur de l'espace de réception (6) et un déplacement du ou des récipients (2) dans l'espace de réception (6) et un déplacement du ou des récipients (2) hors de l'espace de réception (6) latéralement vers l'extérieur de l'espace de réception (6) sont possibles, **caractérisé en ce que**
le récipient (2) peut être déplacé au moyen du dispositif de préhension (7) dans l'espace de réception (6) et hors de l'espace de réception (6), et **en ce que** le ou les récipients (2) peuvent être déplacés dans l'espace de réception (6) depuis différents côtés, et dans lequel l'espace de réception (6) est dimensionné de sorte que plusieurs récipients (2) peuvent être disposés les uns au-dessus des autres dans l'espace de réception (6).

2. Véhicule de transport (1) selon la revendication 1, **caractérisé en ce que** le dispositif de préhension (7) est conçu de sorte qu'il permet de déposer le ou les récipients (2) dans l'espace de réception (6).

3. Véhicule de transport (1) selon la revendication 1 ou 2, **caractérisé en ce que** le dispositif de préhension (7) est conçu de sorte que le ou les récipients (2) peuvent être déplacés horizontalement ou latéralement dans l'espace de réception (6).

4. Véhicule de transport (1) selon l'une des revendications 1 à 3, **caractérisé en ce que** le dispositif de préhension (7) est conçu de sorte que le ou les récipients (2) peuvent être déplacés dans l'espace de réception (6) à partir de côtés mutuellement opposés.

5. Véhicule de transport (1) selon l'une des revendications 1 à 4, **caractérisé en ce que** le dispositif de préhension (7) ou un module du dispositif de préhension (7) est guidé ou peut être décalé dans la direction horizontale au moyen d'un guide (11) ou d'une coulisse.

6. Véhicule de transport (1) selon l'une des revendications 1 à 5, **caractérisé en ce que** le dispositif de préhension (7) comprend des entraînements différents, d'une part pour le levage et la dépose, et d'autre part pour le déplacement du ou des récipients (2).

7. Véhicule de transport (1) selon l'une des revendications 1 à 6, **caractérisé en ce qu'**un entraînement destiné au levage et à la dépose du ou des récipients (2) est fixé à une partie du dispositif de préhension (7) fixe par rapport à l'espace de réception (6) et/ou au châssis (4), ou à une partie du dispositif de préhension (7) mobile par rapport à l'espace de réception (6) et/ou au châssis (4).

8. Véhicule de transport (1) selon l'une des revendications 1 à 7, **caractérisé en ce que** l'espace de réception (6) est dimensionné de sorte que plusieurs récipients (2) peuvent être disposés côte à côte dans l'espace de réception (6).

9. Véhicule de transport (1) selon l'une des revendications 1 à 8, **caractérisé en ce que** les dimensions, en particulier la hauteur, de l'espace de réception (6) et, par conséquent, les dimensions, en particulier la hauteur, du véhicule de transport (1) sont variables, le véhicule de transport (1) comprenant de préférence un guide linéaire et/ou un entraînement permettant de faire varier les dimensions ou la hauteur.

10. Véhicule de transport (1) selon l'une des revendications 1 à 9, **caractérisé en ce que** la hauteur du dispositif de préhension (7) et/ou d'un élément de préhension (9) du dispositif de préhension (7) est variable, de sorte que la saisie du ou des récipients (2) peut s'effectuer à différentes hauteurs prédéfinissables.

11. Véhicule de transport (1) selon l'une des revendications 1 à 10, **caractérisé en ce que** le dispositif de préhension (7) est monté dans ou sur une zone supérieure de l'espace de réception (6) ou forme une zone supérieure ou une extrémité supérieure de l'espace de réception (6).

12. Véhicule de transport (1) selon l'une des revendications 1 à 11, **caractérisé en ce qu'**un entraînement (5) pour le véhicule de transport (1) - en particulier au niveau du châssis (4) - est disposé sous l'espace de réception (6).

13. Système de stockage et de prélèvement pour récipients (2), comprenant :
une structure de grille (3) présentant une pluralité de cellules de grille, chaque cellule de grille définissant une colonne de stockage d'une structure de stockage de récipients disposée sous la structure de grille (3), les colonnes de stockage étant conçues pour recevoir chacune une pile verticale de récipients (2), la structure de grille (3) définissant des trajets de transport longitudinaux dans une direction longitudinale (x) et des trajets de transport transversaux dans une direction transversale (z) et le système de stockage et de prélèvement comprenant au moins un véhicule de transport (1) selon l'une des revendications 1 à 12.

14. Système de stockage et de prélèvement selon la revendication 13, **caractérisé en ce que** le véhicule de transport (1) est conçu de sorte que, lorsque le dispositif de préhension est rétracté, il recouvre 1 à 1,5 cellule de grille (12).

15. Procédé permettant d'accéder à un récipient (2) dans un système de stockage et de prélèvement, dans lequel au moins un véhicule de transport (1) selon l'une des revendications 1 à 12 est utilisé.
